# EUROPÄISCHE PATENTSCHRIFT

(11) **EP 3 430 067 B1**
(45) Veröffentlichungstag und Bekanntmachung des Hinweises auf die Patenterteilung: **11.05.2022**
(21) Anmeldenummer: 17708762.4
(22) Anmeldetag: 03.03.2017
(51) Int. Cl.: C08G 18/48, C08G 18/50, C08G 18/10, C08G 18/12, C08G 65/333

(54) **HYDROXYFUNKTIONELLE POLYETHER-BASIERTE REAKTIONSPRODUKTE UND WÄSSRIGE BASISLACKE ENTHALTEND DIE REAKTIONSPRODUKTE**
HYDROXYFUNCTIONAL POLYETHER BASED REACTION PRODUCTS AND AQUEOUS BASE PAINTS CONTAINING THE REACTION PRODUCTS
PRODUITS DE RÉACTION À BASE DE POLYÉTHER HYDROXYFONCTIONNEL ET APPRÊT EN BASE AQUEUSE CONTENANT LES PRODUITS DE RÉACTION

(30) Priorität: 14.03.2016 EP 16160115
(43) Veröffentlichungstag der Anmeldung: 23.01.2019
(73) Patentinhaber: BASF Coatings GmbH, 48165 Münster (DE)
(72) Erfinder: STEINMETZ, Bernhard, 97535 Ruetschenhausen (DE); HOFFMANN, Peter, 48308 Senden (DE); REUTER, Hardy, 48167 Muenster (DE)
(74) Vertreter: BASF IP Association
(86) Internationale Anmeldenummer: PCT/EP2017/054997
(87) Internationale Veröffentlichungsnummer: WO 2017/157695

(56) Entgegenhaltungen:
- WO-A1-2015/090807
- WO-A1-2016/000952
- DE-A1- 4 010 176
- DE-A1- 19 914 076
- US-A1- 2016 017 192

## Beschreibung

Die vorliegende Erfindung betrifft neuartige wässrige Basislacke, welche hydroxyfunktionelle Polyether-basierte Reaktionsprodukte enthalten sowie die Verwendung der besagten Reaktionsprodukte in wässrigen Basislacken. Sie betrifft auch ein Verfahren zur Herstellung von Mehrschichtlackierungen unter Einsatz von wässrigen Basislacken sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen Eigenschaften solcher Lackierungen (Beschichtungen) sind enorm.

Ein immer wieder auftretendes und vom Stand der Technik nach wie vor nicht völlig zufriedenstellend gelöstes Problem ist die mechanische Beständigkeit der hergestellten Mehrschichtlackierungen, insbesondere gegen Steinschlageinflüsse.

Die Eigenschaften des in diesem Zusammenhang besonders wichtigen Basislacks und den daraus hergestellten Lackschichten werden insbesondere von den im Basislack enthaltenen Bindemitteln und Additiven, beispielsweise speziellen Reaktionsprodukten, bestimmt.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

### Aufgabe

Der vorliegenden Erfindung lag also die Aufgabe zugrunde, einen wässrigen Basislack zur Verfügung zu stellen, mit dessen Hilfe sich Beschichtungen herstellen lassen, die die oben bezeichneten Nachteile des Standes der Technik nicht länger aufweisen. Insbesondere sollte durch die Bereitstellung der wässrigen Basislacke die Möglichkeit geschaffen werden, Beschichtungen bereitzustellen, die eine sehr gute Steinschlagbeständigkeit aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein hydroxyfunktionelles Polyether-basiertes Reaktionsprodukt enthält, welches herstellbar ist durch Umsetzung von
(a) mindestens einer Isocyanatgruppen-haltigen Komponente, die herstellbar ist durch Urethangruppen-bildende Reaktion mindestens eines organischen Diisocyanats (a1) mit mindestens einem Polyether (a2) der allgemeinen Strukturformel (I) 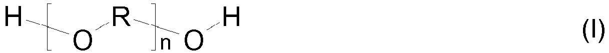 worin
   R ein C₃- bis C₆-Alkylenrest ist und n entsprechend so gewählt ist, dass der Polyether (b) ein zahlenmittleres Molekulargewicht von 500 bis 5000 g/mol besitzt, wobei die Komponenten (a1) und (a2) in einem molaren Verhältnis von 1,8/1,7 bis 3,0/1,0 eingesetzt werden und die resultierende Komponente (a) einen Isocyanatgehalt von 0,5 bis 10,0 % aufweist mit
(b) mindestens einem organischen Polyol,
   wobei die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,33 bis 0,95 liegt und das resultierende Reaktionsprodukt ein zahlenmittleres Molekulargewicht von 700 bis 20.000 g/mol aufweist.

Die Bedingung, dass n so gewählt wird, dass der besagte Polyether ein zahlenmittleres Molekulargewicht von 500 bis 5000 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14. Anhand der gegebenen Vorgaben weiß der Fachmann problemlos, ein entsprechendes Reaktionsprodukt herzustellen beziehungsweise auszuwählen. Davon abgesehen geben die weiter unten folgende Beschreibung und insbesondere die Beispiele nochmals zusätzliche Informationen. Der Parameter n ist also genauso wie das zahlenmittlere Molekulargewicht als ein statistischer Mittelwert zu verstehen.

Der neue Basislack wird in der Folge auch als erfindungsgemäßer Basislack bezeichnet. Bevorzugte Ausführungsformen des erfindungsgemäßen Basislacks gehen aus der folgenden Beschreibung sowie den Unteransprüchen hervor.

Ebenfalls Gegenstand der vorliegenden Erfindung ist die Verwendung des Polyether-basierten Reaktionsprodukts in wässrigen Basislacken zur Verbesserung der Steinschlagbeständigkeit. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der Reaktionsprodukte werden Basislacke erhalten, deren Verwendung bei der Herstellung von Beschichtungen, insbesondere Mehrschichtlackierungen, zu einer sehr guten Steinschlagbeständigkeit führt. Der erfindungsgemäße Basislack kann im Bereich der Erstlackierung, insbesondere dem Bereich der Automobilindustrie, als auch im Bereich der Automobilreparaturlackierung eingesetzt werden.

### Komponente (a)

Das Reaktionsprodukt ist unter Einsatz von mindestens einer speziellen Isocyanatgruppen-haltigen Komponente herstellbar. Die Isocyanatgruppen-haltige Komponente ist durch Urethangruppen-bildende Reaktion mindestens eines organischen Diisocyanats (a1) mit mindestens einem speziellen hydroxyfunktionellen Polyether (a2) herstellbar. Dabei werden die Komponenten (a1) und (a2) in einem molaren Verhältnis von 1,8/1,7 bis 3,0/1,0, bevorzugt von 1,8/1,6 bis 2,5/1,0, besonders bevorzugt 1,8/1,5 bis 2,2/1,0 eingesetzt. Das organische Diisocyanat (a1) wird demnach im molaren Überschuss zum Polyether (a2) eingesetzt. Dies ist wiederum gleichbedeutend mit der Tatsache, dass die Komponente (a) Isocyanatgruppen-haltig ist.

Werden beispielsweise ein molares Äquivalent Polyether (a2) mit zwei molaren Äquivalenten Diisocyanat (a1) umgesetzt, kann im Mittel und innerhalb intrinsischer experimenteller Fehlergrenzen ein blockartiges Produkt der Form A-B-A, wobei A für das reagierte Diisocyanat und B für den reagierten Polyether steht, entstehen. Die beiden Bestandteile A enthalten dabei jeweils eine nicht reagierte Isocyanatgruppe. Weiterhin weist das Produkt A-B-A zwei verbrückende Gruppen, nämlich Urethangruppen, auf. Die aufgrund experimenteller Fehler gegebenenfalls abweichenden tatsächlichen Gegebenheiten können auf einfache Weise durch Berücksichtigung der Molekulargewichte der Ausgangsverbindungen und Vergleich mit dem gemessenen zahlenmittleren Molekulargewicht der Komponente (a) und/oder mit dem Isocyanatgehalt der Komponente (a) festgestellt werden.

Werden zwei molare Äquivalente Polyether (a2) mit drei molaren Äquivalenten Diisocyanat (a1) umgesetzt, kann im Mittel ein blockartiges Produkt der Form A-B-AB-A entstehen. Die Komponente (a) kann also theoretisch, beziehungsweise im Mittel und bei Vernachlässigung experimenteller Abweichungen, durch die Formel A-(B-A)ₘ beschrieben werden. Der Parameter m stellt dann einen statistischen Mittelwert dar, der natürlich, je nach eingesetzten Verhältnissen der Ausgangsverbindungen, auch ungerade Werte annehmen kann. Der Fachmann kann die molaren Verhältnisse problemlos anpassen.

Auch die zugrunde liegenden Reaktionsmechanismen und Reaktionsbedingungen, um eine Verknüpfung der Hydroxylgruppen mit den Isocyanatgruppen zu erreichen, sind bekannt.

Als organische Diisocyanate (a1) können die an sich bekannten Diisocyanate eingesetzt werden, beispielsweise Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat (IPDI), 2-Isocyanato-propylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, meta-Tetramethylxylendiisocyanat (TMXDI) sowie Mischungen aus diesen Polyisocyanaten. Bevorzugt wird IPDI eingesetzt.

Der hydroxyfunktionelle Polyether (a2) kann durch folgende allgemeine Strukturformel (I) beschrieben werden: 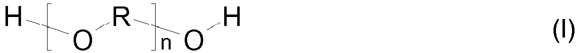 wobei es sich bei R um einen C₃ bis C₆-Alkylrest handelt und wobei der Index n jeweils so zu wählen ist, dass der besagte Polyether ein zahlenmittleres Molekulargewicht von 500 bis 5000 g/mol besitzt. Bevorzugt besitzt er ein zahlenmittleres Molekulargewicht von 500 bis 4000 g/mol, besonders bevorzugt von 550 bis 3500 g/mol und ganz besonders bevorzugt von 600 bis 3200 g/mol. Beispielsweise kann das zahlenmittlere Molekulargewicht bei 1000 g/mol, 2000 g/mol oder 3000 g/mol liegen.

In dem Polyether (a2) können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um einen C₄-Alkylenrest. Besonders bevorzugt handelt es sich um einen Tetramethylenrest.

Ganz besonders bevorzugt handelt es sich bei dem Polyether (a2) um ein im Mittel diolisches, lineares Polytetrahydrofuran.

Der Isocyanatgehalt der Komponente (a) beträgt von 0,5 bis 10,0 %. Bevorzugt beträgt er von 1,0 bis 6,5 %.

### Komponente (b)

Die Herstellung der Reaktionsprodukte kann unter Einsatz mindestens eines organischen Polyols erfolgen. Als organische Polyole kommen letztlich alle dem Fachmann in diesem Zusammenhang bekannten organischen monomeren Verbindungen mit mindestens 2 Hydroxylgruppen in Frage. Bevorzugt sind organische Polyole mit 2 bis 6, nochmals bevorzugt 2 bis 3 Hydroxylgruppen pro Molekül.

Geeignete Diole sind beispielsweise Glykole, wie Ethylenglykol, Propylenglykol, Butylenglykol, 1,4-Butandiol, 1,6-Hexandiol, Neopentylglykol, und andere Diole, wie 1,4-Dimethylolcyclohexan oder 2-Butyl-2-Ethyl-1,3-Propandiol. Geeignete höherfunktionelle Polyole (OH-Funktionalität größer 2) sind beispielsweise Trimethylolpropan, Glycerin, Pentaerythrit und Sorbitol.

Bevorzugt werden organische Polyole mit mindestens 3 Hydroxylgruppen, bevorzugt genau 3 Hydroxylgruppen, eingesetzt. Ein ganz besonders bevorzugtes organisches Polyol ist Trimethylolpropan.

### Das Reaktionsprodukt

Die Herstellung des Reaktionsproduktes weist keine Besonderheiten auf. Die Komponenten (a) und (b) werden über allgemein bekannte Urethanbildungsreaktionen von Hydroxylgruppen mit Isocyanatgruppen miteinander verknüpft. Die Umsetzung kann beispielsweise in Masse oder in Lösung mit typischen organischen Lösemitteln bei Temperaturen von beispielsweise 50°C bis 150°C erfolgen. Selbstverständlich können auch typische Katalysatoren wie Schwefelsäure, Sulfonsäuren und/oder Tetraalkyltitanate, Zink- beziehungsweise Zinnalkoxylate, Dialkylzinnoxide wie beispielsweise Di-n-butylzinnoxid oder organische Salze der Dialkylzinnoxide zum Einsatz kommen. Die hier genannten Reaktionsbedingungen können natürlich auch bei der in dieser Hinsicht analogen Umsetzung der oben beschriebenen Komponenten (a1) und (a2) in Anwendung gebracht werden.

Dabei werden die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,33 bis 0,95 liegt und das resultierende Reaktionsprodukt ein zahlenmittleres Molekulargewicht von 700 bis 20.000 g/mol aufweist. Bevorzugt liegt das Verhältnis im Bereich von 0,40 bis 0,85 und ganz besonders bevorzugt im Verhältnis von 0,45 bis 0,75. Die molare Menge an Isocyanatgruppen kann dabei einfach aus dem zuvor bestimmten NCO-Gehalt der Komponente (a) ermittelt werden.

Das resultierende Reaktionsprodukt besitzt bevorzugt ein zahlenmittleres Molekulargewicht von 1000 bis 15000 g/mol, besonders bevorzugt von 1500 bis 12000 g/mol und ganz besonderes bevorzugt von 1800 bis 10000 g/mol.

Dadurch, dass bei der oben beschriebenen Umsetzung ein molarer Überschuss von Komponente (b) im Verhältnis zu den Isocyanatgruppen eingesetzt wird, und die Komponente (b) mindestens zwei Hydroxylgruppen aufweist, handelt es sich bei dem resultierenden Reaktionsprodukt um ein hydroxyfunktionelles Reaktionsprodukt.

Für ganz besonders bevorzugte Reaktionsprodukte gilt, dass sie herstellbar sind durch Umsetzung von einer Komponente (a) mit einem Isocyanatgehalt von 1,0 bis 6,5 % mit (b) Trimethylolpropan, wobei die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,45 bis 0,75 liegt und das resultierende Reaktionsprodukt ein zahlenmittleres Molekulargewicht von 1500 bis 12000 g/mol aufweist.

### Der pigmentierte wässrige Basislack

Die vorliegende Erfindung betrifft einen pigmentierten wässrigen Basislack, welcher mindestens ein Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehendes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht(en) gehärtet wird(werden). Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten. Letzteres ist im Rahmen der vorliegenden Erfindung eine bevorzugte Ausführungsform. Es hat sich nämlich gezeigt, dass bei Einsatz des erfindungsgemäßen Reaktionsprodukts trotz der Herstellung von nur einer Basislackschicht und einer damit gegebenen deutlichen Prozessvereinfachung eine ausgezeichnete Steinschlagbeständigkeit resultiert.

Die Summe über die gewichtsprozentualen Anteile, bezogen auf das Gesamtgewicht des pigmentierten wässrigen Basislacks, aller erfindungsgemäßen Reaktionsprodukte beträgt bevorzugt 0,1 bis 20 Gew.-%, besonders bevorzugt 0,5 bis 15 Gew.-% und ganz besonders bevorzugt 1,0 bis 10 Gew.-% oder sogar 1,5 bis 5 Gew.-%.

Liegt der Gehalt des Reaktionsprodukts unter 0,1 Gew.-% so ist es gegebenenfalls möglich, dass keine Verbesserung hinsichtlich Haftung und Steinschlagbeständigkeit mehr erzielt wird. Liegt der Gehalt bei mehr als 20 Gew.-% so können unter Umständen aufgrund der dann zahlreichen potentiell polaren Gruppen (Hydroxylgruppen) des Reaktionsprodukts Nachteile hinsichtlich der Schwitzwasserbeständigkeit der aus dem Basislack hergestellten Lackierung auftreten.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 0,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 0,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze (auch genannt Melaminformaldehydharze).

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 35 Gew.-%, besonders bevorzugt 3 bis 30 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem Reaktionsprodukt enthalten die erfindungsgemäßen pigmentierten wässrigen Basislacke besonders bevorzugt mindestens ein weiteres, vom Reaktionsprodukt verschiedenes Polymer als Bindemittel, insbesondere mindestens ein Polymer ausgewählt aus der Gruppe bestehend aus Polyurethanen, Polyestern, Poly(meth)acrylaten und/oder Mischpolymerisaten der genannten Polymere, insbesondere bevorzugt jedenfalls, aber nicht zwingend ausschließlich, mindestens ein Polyurethan-Poly(meth)acrylat.

Im Rahmen der vorliegenden Erfindung bedeutet der Begriff "physikalische Härtung" die Bildung eines Films durch Abgabe von Lösemitteln aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, das heißt Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch härtbar sind. Selbstverständlich findet bei Basislacken, die thermisch härtbar sind, immer auch anteilig eine physikalische Härtung statt. Diese Lacke werden aber schon aus Gründen der Übersichtlichkeit als thermisch härtbar bezeichnet.

Als thermisch härtende Basislacke sind solche bevorzugt, die als Bindemittel ein Polyurethanharz und/oder Polyurethan-Poly(meth)acrylat, bevorzugt ein hydroxygruppenhaltiges Polyurethanharz und/oder Polyurethan-Poly(meth)acrylat, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanate, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen, ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei beiden Gruppen der vorgenannten Harze handelt es sich also um Mischpolymere, die im Falle des Einsatzes von (Meth)acrylatgruppen-haltigen Monomeren als olefinisch ungesättigte Monomere auch Polyurethan-Poly(meth)acrylate (siehe auch weiter oben) genannt werden können. Solche Polyurethan-Poly(meth)acrylate sind im Rahmen der vorliegenden Erfindung besonders bevorzugt einzusetzen. Bei den olefinisch ungesättigten Monomeren handelt es sich also bevorzugt um (Meth)acrylatgruppen-haltige Monomere. Ebenfalls bevorzugt ist, dass die (Meth)acrylatgruppen-haltigen Monomere in Kombination mit weiteren olefinisch ungesättigten Verbindungen eingesetzt werden, welche keine (Meth)acrylatgruppen enthalten. Besonders bevorzugt werden als olefinisch ungesättigte Monomere Acrylat- oder (Meth)acrylatgruppen-haltige Monomere an das Polyurethanharz kovalent gebunden. Diese Form von Polyurethan-Poly(meth)acrylaten ist nochmals bevorzugt.

Geeignete gesättigte oder ungesättigte Polyurethanharze beziehungsweise Polyurethan-Poly(meth)acrylate werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32, oder
- der deutschen Patentanmeldung DE 44 37 535 A1.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung) oder
- funktionelle Gruppen, die durch Neutralisationsmittel in Anionen überführt
   werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können), sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxylgruppe, enthalten. Zur Einführung der ionischen Modifizierung können Monomere eingesetzt werden, die neben den modifizierenden Gruppen mindestens eine Hydroxylgruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Wie schon oben angedeutet, kann es sich bei dem Polyurethanharz vorzugsweise um ein mittels olefinisch ungesättigten Monomeren gepfropftes Pfropfpolymer handeln. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren, wobei es sich dann um die schon oben beschriebenen Polyurethan-Poly(meth)acrylate handelt. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt (siehe auch Beschreibung weiter oben). In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxylgruppe enthalten. Dann kann auch zunächst eine Anbindung der olefinisch ungesättigten Verbindungen über diese Hydroxylgruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation, wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha-, beta-ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxylgruppen sowie primäre und sekundäre Aminogruppen. Insbesondere bevorzugt sind Hydroxylgruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxylgruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxylgruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unabhängig davon, dass im Rahmen der vorliegenden Erfindung stellenweise sowohl Polyurethane (auch genannt Polyurethanharze), als auch Polyurethan-Poly(meth)acrylate genannt werden, gilt, dass der Ausdruck Polyurethane als Oberbegriff die Polyurethan-Poly(meth)acrylate umfasst. Wird an einer bestimmten Textstelle also nicht zwischen beiden Polymerklassen unterschieden, sondern ist lediglich der Ausdruck Polyurethan oder Polyurethanharz genannt, gelten beide Polymerklassen als umfasst.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 25 Gew.-%.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS 1130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Enthalten sein können auch Verdicker wie anorganische Verdicker aus der Gruppe der Schichtsilikate oder organische Verdicker wie (Meth)acrylsäure-(Meth)acrylat-Copolymerisat-Verdicker oder auch Polyurethanverdicker, welche von den eingesetzten Bindemitteln verschieden sind.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack (Einwaage 1,0 g) für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln. Genauso findet die Methode Anwendung, um die Menge oder eine Eigenschaft verschiedener weiterer Komponenten zu bestimmen. Soll beispielsweise die Menge oder eine Eigenschaft einer zur Herstellung von erfindungsgemäßen Reaktionsprodukten einsetzbaren Komponente (a), die in einem Lösemittelgemisch vorliegt, bestimmt werden, wird dabei diese Methode in Anwendung gebracht. In diesem Zusammenhang sei beispielsweise auf den Isocyanatgehalt einer Komponente (a) (das heißt der Komponente (a) an sich (Festkörper) und ohne Lösemittel) verwiesen. Genauso verhält es sich beispielsweise mit der OH-Zahl eines im Basislack einzusetzenden Polymers.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein Reaktionsprodukt enthält. Alle vorstehend genannten Ausführungen hinsichtlich des Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen (Trockenfilmschichtdicke). Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer (Trockenfilmschichtdicke), liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,
Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,
Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.

In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein erfindungsgemäßes Reaktionsprodukt der Aufbau von Mehrschichtlackierungen, die hervorragende mechanische Stabilität und Haftung aufweisen und damit technologisch besonders herausragend sind.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des Reaktionsprodukts und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebende Lackierungen und farb- und effektgebende Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung, gegebenenfalls nur die Klarlackierung, ab- oder angeschliffen werden, nicht aber die in der Regel darunter angeordnete Füllerschicht und Grundierungsschicht ab- oder angeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch Spritzapplikation, beispielsweise durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20°C. Solche Wasserbasislacke werden dann natürlich in der Regel als Zweikomponentensysteme formuliert.

Beim sogenannten Hochtemperatureinbrennen erfolgt die Härtung vorzugsweise bei Temperaturen von 130 bis 160°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Ein weiterer Aspekt der vorliegenden Erfindung ist die Verwendung des erfindungsgemäßen Reaktionsprodukts in pigmentierten wässrigen Basislacken zur Verbesserung der Steinschlagbeständigkeit von Lackierungen, welche unter Einsatz des Basislacks hergestellt werden.

Im Folgenden wird die Erfindung anhand von Beispielen erläutert.

### Beispiele

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Isocyanatgehalt:

Die Ermittlung des Isocyanatgehalts, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1 N Salzsäure in Anlehnung an die DIN EN ISO 3251, DIN EN ISO 11909 und DIN EN ISO 14896 bestimmt. Über den Anteil einer Komponente (Festkörper) in Lösung kann auf den NCO-Gehalt der Komponente an sich zurückgerechnet werden. Der NCO-Gehalt gibt also den auf das Gewicht bezogenen, prozentualen Anteil von NCO-Gruppen am Gesamtgewicht der jeweiligen Komponente an.

### Herstellung erfindungsgemäß einzusetzender Reaktionsprodukte (ER) sowie zum Vergleich eingesetzter Reaktionsprodukte (VR):

### ER1:

In einem 4 l Edelstahlreaktor, ausgestattet mit Ankerrührer, Thermometer, Kühler, werden 466,8 g Isophorondiisocyanat , 918 g Methylethylketon, 910 g PolyTHF650 (Fa. BASF SE) mit einer OH-Zahl von 172 mg KOH/g (1,4 mol) sowie 0,69 g Dibutylzinndilaurat auf 80°C aufgeheizt. Es wird so lange bei dieser Temperatur gehalten, bis ein Gehalt an NCO bezogen auf den Feststoffgehalt der Lösung konstant ist und in einem Bereich von 2,0 bis 2,1 % liegt (entspricht damit dem NCO-Gehalt der Komponente (a)). Es werden dann 150 g Trimethylolpropan zugesetzt und weiter bei der oben genannten Temperatur gehalten bis ein NCO-Wert von kleiner 0,1 % erreicht ist. Danach wird das Methylethylketon bis zu einem Gehalt von weniger als 0,5 % im Vakuum abdestilliert und das erhaltene Harz bei 80°C mit 640 g Butylglykol angelöst.

Der Feststoffgehalt der Harzlösung liegt bei 67 % (gemessen bei 130°C für 1 h im Umluftofen an einer Probe von 1 g unter Zugabe 1 ml Methylethylketon) Zahlenmittleres Molekulargewicht (Dampfdruckosmose): 2400 g/mol Viskosität 50 %ig in Butylglykol: 2940 mPas, (gemessen bei 23°C mit einem Rotationsviskosimeter der Fa. Brookfield, Typ CAP 2000+, Spindel 3, Scherrate: 750 s⁻¹)

### ER2:

In einem 4 l Edelstahlreaktor, ausgestattet mit Ankerrührer, Thermometer, Kühler, werden 382,3 g Isophorondiisocyanat, 1401 g Methylethylketon, 1720 g PolyTHF2000 (Fa. BASF SE) mit einer OH-Zahl von 56 mg KOH/g (0,86 mol) sowie 1,05 g Dibutylzinndilaurat auf 80°C aufgeheizt. Es wird so lange bei dieser Temperatur gehalten, bis ein Gehalt an NCO bezogen auf den Feststoffgehalt der Lösung konstant ist und in einem Bereich von 1,6 % bis 1,7 % liegt (entspricht damit dem NCO-Gehalt der Komponente (a)). Es werden dann 179 g Trimethylolpropan zugesetzt und weiter bei der oben angegebenen Temperatur gehalten bis ein NCO-Wert von kleiner 0,1% erreicht ist. Danach wird das Methylethylketon bis zu einem Gehalt von weniger als 0,5 % im Vakuum abdestilliert und das erhaltene Harz bei 80°C mit 570 g Butylglykol angelöst.

Der Feststoffgehalt der Harzlösung liegt bei 78 % (gemessen bei 130°C für 1 h im Umluftofen an einer Probe von 1 g unter Zugabe 1 ml Methylethylketon) Zahlenmittleres Molekulargewicht (Dampfdruckosmose): 2600 g/mol Viskosität 50 %ig in Butylglykol: 3475 mPas, (gemessen bei 23°C mit einem Rotationsviskosimeter der Fa. Brookfield, Typ CAP 2000+, Spindel 3, Scherrate: 750 s⁻¹)

### VR1:

Als zum Vergleich eingesetztes Reaktionsprodukt diente ein Polyester, hergestellt gemäß Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das im Rahmen der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### Herstellung eines nicht erfindungsgemäßen Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| Wässrige Lösung von 3% Natrium-Lithium-Magnesium-Schichtsilikat Laponite^{®} RD (Fa. Altana-Byk) und 3% Pluriol^{®} P900 (Fa. BASF SE) | 27 |
| Deionisiertes Wasser | 15,9 |
| Butylglykol (Fa. BASF SE) | 3,5 |
| Hydroxyfunktionelles polyurethanmodifiziertes Polyacrylat; hergestellt gemäß S. 7, Z. 55 bis S.8, Z. 23 der DE 4437535 A1 | 2,4 |
| 50 Gew.-%ige Lösung Rheovis^{®} PU 1250 (BASF SE) in Butylglykol, Rheologiemittel | 0,2 |
| VR1 | 2,5 |
| TMDD 50% BG (Fa. BASF SE), 52%ige Lösung von 2,4,7,9-Tetramethyl-5-decin-4,7-diol in Butylglykol | 1,2 |
| Luwipal^{®} 052 (Fa. BASF SE), Melamin-Formaldehyd-Harz | 4,7 |
| 10%ige Lösung von N,N-Dimethylethanolamin (Fa. BASF SE) in Wasser | 0,5 |
| Pfropfmischpolymerisat auf Polyurethanbasis; hergestellt analog DE 19948004 - A1 (Seite 27 - Beispiel 2) | 19,6 |
| Isopropanol (Fa. BASF SE) | 1,4 |
| Byk-347^{®} (Fa. Altana-Byk) | 0,5 |
| Pluriol^{®} P 900 (Fa. BASF SE) | 0,3 |
| Tinuvin^{®} 384-2 (Fa. BASF SE) | 0,6 |
| Tinuvin^{®} 123 (Fa. BASF SE) | 0,3 |
| Rußpaste | 4,3 |
| Blaupaste | 11,4 |
| Mica-Schlämme | 2,8 |
| **Organische Phase** | |
| Aluminiumpigment (Fa. Altana-Eckart ) | 0,3 |
| Butylglykol (Fa. BASF SE) | 0,3 |
| Pfropfmischpolymerisat auf Polyurethanbasis; hergestellt analog DE 19948004 - A1 (Seite 27 - Beispiel 2) | 0,3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen^{®} Blau L 6482, 1,5 Gewichtsteilen Dimethylethanolamin (10%ig in VE-Wasser), 1,2 Gewichtsteilen eines handelsüblichen Polyethers (Pluriol^{®} P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,45 Gewichtsteilen Dimethylethanolamin (10%ig in VE-Wasser), 2 Gewichtsteilen eines handelsüblichen Polyethers (Pluriol^{®} P900 der Firma BASF SE) und 61,45 Gewichtsteilen deionisiertem Wasser hergestellt.

### Herstellung der Mica-Schlämme:

Die Mica-Schlämme wurde durch Vermischen mittels eines Rührorgans von 1,5 Gewichtsteilen Pfropfmischpolymerisat auf Polyurethanbasis; hergestellt analog DE 19948004 - A1 (Seite 27 - Beispiel 2) und 1,3 Gewichtsteilen der handelsüblichen Mica Mearlin Ext. Fine Violet 539V der Firma Merck erhalten.

### Herstellung der erfindungsgemäßen Wasserbasislacke E1 und E2

Die Wasserbasislacke E1 und E2 wurden analog Tabelle A hergestellt, wobei allerdings statt VR1 das Reaktionsprodukt ER1 (Wasserbasislack E1) beziehungsweise das Reaktionsprodukt ER2 (Wasserbasislack E2) eingesetzt wurde. Dabei wurde durch Ausgleich der Lösemittelmenge beziehungsweise durch Berücksichtigung der Festkörper der zuzugebenden Komponente der jeweils selbe Anteil des Reaktionsprodukts ER1 beziehungsweise ER2 eingesetzt.

**Tabelle B: Basislacke 1, E1 und E2**

| | **Reaktionsprodukt** |
|---|---|
| Wasserbasislack 1 | VR1 |
| Wasserbasislack E1 | ER1 |
| Wasserbasislack E2 | ER2 |

### Vergleich zwischen den Wasserbasislacken 1 und E1, E2

### Steinschlagbeständigkeit:

Zur Bestimmung der Steinschlagbeständigkeit wurden die Mehrschichtlackierungen nach der folgenden allgemeinen Vorschrift hergestellt:
Ein mit einer KTL (kathodische Elektrotauchlackierung) beschichtetes Stahlblech der Abmessungen 10 x 20 cm diente als Substrat.

Auf dieses Blech wurde zunächst der jeweilige Basislack (Tabelle B) mit einer Zielschichtdicke (Trockenfilmschichtdicke) von 20 Mikrometern pneumatisch appliziert. Nach 1 min Ablüften des Basislacks bei Raumtemperatur wurde der Basislack über 10 min bei 70°C im Umluftofen zwischengetrocknet. Auf die zwischengetrocknete Wasserbasislackschicht wurde ein üblicher Zweikomponentenklarlack mit einer Zielschichtdicke (Trockenfilmschichtdicke) von 40 Mikrometern appliziert. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet.

Die so erhaltenen Mehrschichtlackierungen wurden hinsichtlich ihrer Steinschlagbeständigkeit untersucht. Dazu wurde der Steinschlagtest wurde DIN 55966-1 durchgeführt. Die Beurteilung der Ergebnisse des Steinschlagtests wurde nach DIN EN ISO 20567-1 durchgeführt. Niedrigere Werte stehen für eine bessere Steinschlagbeständigkeit.

Die Ergebnisse finden sich in der Tabelle 1. Die Angabe des Wasserbasislacks (WBL) gibt jeweils an, welcher WBL in der jeweiligen Mehrschichtlackierung eingesetzt wurde.

**Tabelle 1: Steinschlagbeständigkeit der Wasserbasislacke 1 und E1, E2**

| **WBL** | **Steinschlagergebnis** |
|---|---|
| 1 | 2,5 |
| E1 | 1,5 |
| E2 | 1,5 |

Die Ergebnisse untermauern, dass der Einsatz der erfindungsgemäß einzusetzenden Reaktionsprodukte in Basislacken die Steinschlagbeständigkeit im Vergleich zum Wasserbasislack 1 deutlich erhöht.

### Herstellung eines nicht erfindungsgemäßen Wasserbasislacks 2

Die in der Tabelle C unter "wässrige Phase" aufgeführten Komponenten wurden in der angegebenen Reihenfolge zu einer wässrigen Mischung zusammengerührt. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle C: Wasserbasislack 2**

| Komponente | Gewichtsteile |
|---|---|
| **Wässrige Phase** | |
| Wässrige Lösung von 3% Natrium-Lithium-Magnesium-Schichtsilikat Laponite^{®} RD (Fa. Altana-Byk) und 3% Pluriol^{®} P900 (Fa. BASF SE) | 14 |
| Deionisiertes Wasser | 16 |
| Butylglykol (Fa. BASF SE) | 1,4 |
| VR1 | 2,3 |
| 10 Gew.-%ige Lösung Rheovis^{®} AS 1130 (BASF SE) in deionisiertem Wasser, Rheologiemittel | 6 |
| TMDD 50% BG (Fa. BASF SE), 52%ige Lösung von 2,4,7,9-Tetramethyl-5-decin-4,7-diol in Butylglykol | 1,6 |
| Cymel^{®} 1133(Fa. Cytec), Melamin-Formaldehyd-Harz | 5,9 |
| 10%ige Lösung von N,N-Dimethylethanolamin (Fa. BASF SE) in Wasser | 0,4 |
| Polyurethandispersion - hergestellt nach WO 92/15405 (Seite 14, Zeile 13 bis Seite 15, Zeile 28) | 20 |
| 2-Ethylhexanol (Fa. BASF SE) | 3,5 |
| Triisobutylphosphat (Fa. Bayer) | 2,5 |
| Nacure^{®} 2500 (Fa. King Industries) | 0,6 |
| Weißpaste | 24 |
| Rußpaste | 1,8 |

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,45 Gewichtsteilen Dimethylethanolamin (10%ig in VE-Wasser), 2 Gewichtsteilen eines handelsüblichen Polyethers (Pluriol^{®} P900 der Firma BASF SE) und 61,45 Gewichtsteilen deionisiertem Wasser hergestellt.

### Herstellung der Weißpaste:

Die Weißpaste wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol eines und 4 Gewichtsteilen deionisiertem Wasser hergestellt.

### Herstellung der erfindungsgemäßen Wasserbasislacke E3 und E4

Die Wasserbasislacke E3 und E4 wurden analog Tabelle C hergestellt, wobei allerdings statt VR1 das Reaktionsprodukt ER1 (Wasserbasislack E3) beziehungsweise das Reaktionsprodukt ER2 (Wasserbasislack E4) eingesetzt wurde. Dabei wurde durch Ausgleich der Lösemittelmenge beziehungsweise durch Berücksichtigung der Festkörper der zuzugebenden Komponente der jeweils selbe Anteil des Reaktionsprodukts ER1 beziehungsweise ER2 eingesetzt.

**Tabelle D: Basislacke 2, E3 und E4**

| | **Reaktionsprodukt** |
|---|---|
| Wasserbasislack 2 | VR1 |
| Wasserbasislack E3 | ER1 |
| Wasserbasislack E4 | ER2 |

### Herstellung eines nicht erfindungsgemäßen Wasserbasislacks 3

Die in der Tabelle E unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle E: Wasserbasislack 3**

| Komponente | Gewichtsteile |
|---|---|
| **Wässrige Phase** | |
| Wässrige Lösung von 3% Natrium-Lithium-Magnesium-Schichtsilikat Laponite^{®} RD (Fa. Altana-Byk) und 3% Pluriol^{®} P900 (Fa. BASF SE) | 20,35 |
| Deionisiertes Wasser | 17,27 |
| Butylglykol (Fa. BASF SE) | 2,439 |
| Hydroxyfunktionelles polyurethanmodifiziertes Polyacrylat; hergestellt gemäß S. 7, Z. 55 bis S.8, Z. 23 der DE 4437535 A1 | 2,829 |
| 50 Gew.-%ige Lösung Rheovis^{®} PU 1250 (BASF SE) in Butylglykol, Rheologiemittel | 0,234 |
| 10 Gew.-%ige Lösung Rheovis^{®} AS 1130 (BASF SE) in deionisiertem Wasser, Rheologiemittel | 4,976 |
| TMDD 50% BG (Fa. BASF SE), 52%ige Lösung von 2,4,7,9-Tetramethyl-5-decin-4,7-diol in Butylglykol | 1,317 |
| Cymel^{®} 1133(Fa. Cytec), Melamin-Formaldehyd-Harz | 3,512 |
| 10%ige Lösung von N,N-Dimethylethanolamin (Fa. BASF SE) in Wasser | 1,356 |
| Polyurethandispersion - hergestellt nach WO 92/15405 (Seite 14, Zeile 13 bis Seite 15, Zeile 28) | 24,976 |
| Isopropanol (Fa. BASF SE) | 1,659 |
| Byk-347^{®} (Fa. Altana-Byk) | 0,537 |
| Pluriol^{®} P 900 (Fa. BASF SE) | 0,39 |
| 2-Ethylhexanol (Fa. BASF SE) | 1,854 |
| Triisobutylphosphat (Fa. Bayer) | 1,151 |
| Nacure^{®} 2500 (Fa. King Industries) | 0,39 |
| Tinuvin^{®} 384-2 (Fa. BASF SE) | 0,605 |
| Tinuvin^{®} 123 (Fa. BASF SE) | 0,39 |
| Blaupaste | 0,605 |

| **Organische Phase** | |
|---|---|
| Aluminiumpigment 1 (Fa. Altana-Eckart ) | 4,585 |
| Aluminiumpigment 2 (Fa. Altana-Eckart ) | 0,907 |
| Butylglykol (Fa. BASF SE) | 3,834 |
| Pfropfmischpolymerisat auf Polyurethanbasis; hergestellt analog DE 19948004 - A1 (Seite 27 - Beispiel 2) | 3,834 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen^{®} Blau L 6482, 1,5 Gewichtsteilen Dimethylethanolamin (10%ig in VE-Wasser), 1,2 Gewichtsteilen eines handelsüblichen Polyethers (Pluriol^{®} P900 der Firma BASF SE) und 15 Gewichtsteilen deionisiertem Wasser hergestellt.

### Vergleich der Wasserbasislacke 2 und E3, E4

Zur Bestimmung der Steinschlagbeständigkeit wurden die Mehrschichtlackierungen nach der folgenden allgemeinen Vorschrift hergestellt:
Ein mit einer KTL beschichtetes Stahlblech der Abmessungen 10 x 20 cm diente als Substrat.

Auf dieses Blech wurde zunächst der jeweilige Basislack (Tabelle D) mit einer Zielschichtdicke (Trockenfilmschichtdicke) von 20 Mikrometern appliziert. Nach 4 min Ablüften des Basislacks bei Raumtemperatur wurde der Wasserbasislack 3 in einer Zielschichtdicke (Trockenfilmschichtdicke) von 20 Mikrometern appliziert, anschließend 4 min bei Raumtemperatur abgelüftet und danach über 10 min bei 70°C im Umluftofen zwischengetrocknet. Auf die zwischengetrocknete Wasserbasislackschicht wurde ein üblicher Zweikomponentenklarlack mit einer Zielschichtdicke (Trockenfilmschichtdicke) von 40 Mikrometern appliziert. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet.

Die Ergebnisse finden sich in der Tabelle 2. Die Angabe des Wasserbasislacks (WBL) gibt jeweils an, welche WBL in der jeweiligen Mehrschichtlackierung eingesetzt wurde.

**Tabelle 2: Steinschlagbeständigkeit der Wasserbasislacke 2 und E3, E4**

| **WBL** | **Steinschlagergebnis** |
|---|---|
| 2 + 3 | 2,0 |
| E3 + 3 | 1,5 |
| E4 +3 | 1,5 |

Die Ergebnisse untermauern wiederum, dass der Einsatz der erfindungsgemäß einzusetzenden Reaktionsprodukte in Basislacken die Steinschlagbeständigkeit im Vergleich zu nicht erfindungsgemäßen Systemen erhöht.

## Patentansprüche

1. Pigmentierter wässriger Basislack enthaltend ein hydroxyfunktionelles Polyether-basiertes Reaktionsprodukt, welches herstellbar ist durch Urethangruppen-bildende Umsetzung von
(a) mindestens einer Isocyanatgruppen-haltigen Komponente, die herstellbar ist durch Urethangruppen-bildende Reaktion mindestens eines organischen Diisocyanats (a1) mit mindestens einem Polyether (a2) der allgemeinen Strukturformel (I) 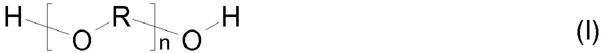 worin
R ein C₃- bis C₆-Alkylenrest ist und n entsprechend so gewählt ist, dass der Polyether (b) ein zahlenmittleres Molekulargewicht von 500 bis 5000 g/mol besitzt, bestimmt wie in der Beschreibung angegeben, wobei die Komponenten (a1) und (a2) in einem molaren Verhältnis von 1,8/1,7 bis 3,0/1,0 eingesetzt werden und die resultierende Komponente (a) einen Isocyanatgehalt von 0,5 bis 10,0 % aufweist
mit
(b) mindestens einem organischen Polyol,
wobei die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,33 bis 0,95 liegt und das resultierende Reaktionsprodukt ein zahlenmittleres Molekulargewicht von 700 bis 20000 g/mol aufweist, bestimmt wie in der Beschreibung angegeben.

2. Basislack nach Anspruch 1, **dadurch gekennzeichnet, dass** der Polyether (a2) ein zahlenmittleres Molekulargewicht von 600 bis 3200 g/mol besitzt.

3. Basislack nach Anspruch 1 oder 2, **dadurch gekennzeichnet, dass** es sich bei der Gruppe R gemäß der allgemeinen Strukturformel (I) um Tetramethylenreste handelt.

4. Basislack nach einem der Ansprüche 1 bis 3, **dadurch gekennzeichnet, dass** die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,40 bis 0,85 liegt.

5. Basislack nach einem der Ansprüche 1 bis 4, **dadurch gekennzeichnet, dass** das Polyether-basierte Reaktionsprodukt ein zahlenmittleres Molekulargewicht von 1500 bis 12000 g/mol besitzt.

6. Basislack nach einem der Ansprüche 1 bis 5, **dadurch gekennzeichnet, dass** die Komponente (a) einen Isocyanatgehalt von 1,0 bis 6,5 % aufweist.

7. Pigmentierter wässriger Basislack gemäß einem der Ansprüche 1 bis 6, **dadurch gekennzeichnet, dass** die Summe über die gewichtsprozentualen Anteile, bezogen auf das Gesamtgewicht des pigmentierten wässrigen Basislacks, aller Polyether-basierten Reaktionsprodukte 0,1 bis 20 Gew.-% beträgt.

8. Pigmentierter wässriger Basislack nach einem der Ansprüche 1 bis 7, **dadurch gekennzeichnet, dass** er ein mittels olefinisch ungesättigter Monomere gepfropftes Polyurethanharz, welches zudem Hydroxylgruppen enthält, sowie ein Melaminharz umfasst.

9. Pigmentierter wässriger Basislack nach einem der Ansprüche 1 bis 8, **dadurch gekennzeichnet, dass** die Komponente (b) drei Hydroxylgruppen aufweist.

10. Verwendung eines Reaktionsprodukts in einem pigmentierten wässrigen Basislack zur Verbesserung der Steinschlagbeständigkeit von Lackierungen, welche unter Einsatz des Basislacks hergestellt werden ,wobei das Reaktionsprodukt eine hydroxyfunktionelles Polyether-basiertes Reaktionsprodukt ist, welches herstellbar ist durch Urethangruppen-bildende Umsetzung von
(a) mindestens einer Isocyanatgruppen-haltigen Komponente, die herstellbar ist durch Urethangruppen-bildende Reaktion mindestens eines organischen Diisocyanats (a1) mit mindestens einem Polyether (a2) der allgemeinen Strukturformel (I) 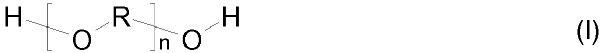 worin
R ein C₃- bis C₆-Alkylenrest ist und n entsprechend so gewählt ist, dass der Polyether (b) ein zahlenmittleres Molekulargewicht von 500 bis 5000 g/mol besitzt, bestimmt wie in der Beschreibung angegeben, wobei die Komponenten (a1) und (a2) in einem molaren Verhältnis von 1,8/1,7 bis 3,0/1,0 eingesetzt werden und die resultierende Komponente (a) einen Isocyanatgehalt von 0,5 bis 10,0 % aufweist
mit
(b) mindestens einem organischen Polyol,
wobei die Mengen der Komponenten (a) und (b) so aufeinander abgestimmt werden, dass das Verhältnis der molaren Menge an Isocyanatgruppen der Komponente (a) und der molaren Menge der Komponente (b) in einem Bereich von 0,33 bis 0,95 liegt und das resultierende Reaktionsprodukt ein zahlenmittleres Molekulargewicht von 700 bis 20000 g/mol aufweist, bestimmt wie in der Beschreibung angegeben.

11. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird, **dadurch gekennzeichnet, dass** in Stufe (1) ein pigmentierter wässriger Basislack gemäß einem der Ansprüche 1 bis 9 eingesetzt wird.

12. Verfahren nach Anspruch 11, **dadurch gekennzeichnet, dass** das Substrat aus Stufe (1) ein mit einer gehärteten Elektrotauchlackschicht beschichtetes metallisches Substrat ist und alle auf die Elektrotauchlackschicht applizierten Schichten gemeinsam gehärtet werden.

13. Verfahren nach Anspruch 11, **dadurch gekennzeichnet, dass** es sich bei dem Substrat aus Stufe (1) um ein Metall- oder Kunststoffsubstrat handelt.

14. Mehrschichtlackierung, herstellbar nach dem Verfahren gemäß einem der Ansprüche 11 bis 13.

## Claims

1. Pigmented aqueous basecoat material comprising a hydroxy-functional polyether-based reaction product which is preparable by urethane group-forming reaction of
(a) at least one component containing isocyanate groups which is preparable by urethane group-forming reaction of at least one organic diisocyanate (a1) with at least one polyether (a2) of the general structural formula (I) 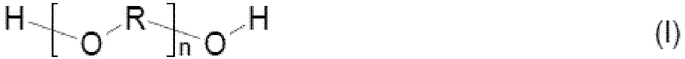 in which
R is a C₃ to C₆ alkylene radical and n is selected accordingly such that the polyether (b) possesses a number-average molecular weight of 500 to 5000 g/mol, determined as specified in the description, the components (a1) and (a2) being used in a molar ratio of 1.8/1.7 to 3.0/1.0 and the resulting component (a) having an isocyanate content of 0.5 to 10.0%,
with
(b) at least one organic polyol,
where the amounts of components (a) and (b) are harmonized with one another such that the ratio of the molar amount of isocyanate groups in component (a) to the molar amount of component (b) is in a range from 0.33 to 0.95 and the resulting reaction product has a number-average molecular weight of 700 to 20 000 g/mol, determined as specified in the description.

2. Basecoat material according to Claim 1, **characterized in that** the polyether (a2) possesses a number-average molecular weight of 600 to 3200 g/mol.

3. Basecoat material according to Claim 1 or 2, **characterized in that** the group R in the general structural formula (I) comprises tetramethylene radicals.

4. Basecoat material according to any of Claims 1 to 3, **characterized in that** the amounts of components (a) and (b) are harmonized with one another in such a way that the ratio of the molar amount of isocyanate groups in component (a) to the molar amount of component (b) is in a range from 0.40 to 0.85.

5. Basecoat material according to any of Claims 1 to 4, **characterized in that** the polyether-based reaction product possesses a number-average molecular weight of 1500 to 12 000 g/mol.

6. Basecoat material according to any of Claims 1 to 5, **characterized in that** the component (a) has an isocyanate content of 1.0 to 6.5%.

7. Pigmented aqueous basecoat material according to any of Claims 1 to 6, **characterized in that** the sum total of the weight-percentage fractions, based on the total weight of the pigmented aqueous basecoat material, of all polyether-based reaction products is 0.1 to 20 wt%.

8. Pigmented aqueous basecoat material according to any of Claims 1 to 7, **characterized in that** it comprises a melamine resin and also a polyurethane resin that is grafted by means of olefinically unsaturated monomers and that further comprises hydroxyl groups.

9. Pigmented aqueous basecoat material according to any of Claims 1 to 8, **characterized in that** the component (b) has three hydroxyl groups.

10. Use of a reaction product in a pigmented aqueous basecoat material for improving the stonechip resistance of paint systems produced using the basecoat material, the reaction product being a hydroxy-functional polyether-based reaction product which is preparable by urethane group-forming reaction of
(a) at least one component containing isocyanate groups which is preparable by urethane group-forming reaction of at least one organic diisocyanate (a1) with at least one polyether (a2) of the general structural formula (I) 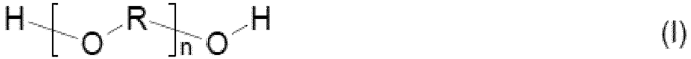 in which
R is a C₃ to C₆ alkylene radical and n is selected accordingly such that the polyether (b) possesses a number-average molecular weight of 500 to 5000 g/mol, determined as specified in the description, the components (a1) and (a2) being used in a molar ratio of 1.8/1.7 to 3.0/1.0 and the resulting component (a) having an isocyanate content of 0.5 to 10.0%,
with
(b) at least one organic polyol,
where the amounts of components (a) and (b) are harmonized with one another such that the ratio of the molar amount of isocyanate groups in component (a) to the molar amount of component (b) is in a range from 0.33 to 0.95 and the resulting reaction product has a number-average molecular weight of 700 to 20 000 g/mol, determined as specified in the description.

11. Method for producing a multicoat paint system by
(1) applying a pigmented aqueous basecoat material to a substrate,
(2) forming a polymer film from the coating material applied in stage (1),
(3) applying a clearcoat material to the resultant basecoat, and subsequently
(4) curing the basecoat together with the clearcoat, **characterized in that** a pigmented aqueous basecoat material according to any of Claims 1 to 9 is used in stage (1).

12. Method according to Claim 11, **characterized in that** the substrate from stage (1) is a metallic substrate coated with a cured electrocoat, and all coats applied to the electrocoat are cured jointly.

13. Method according to Claim 11, **characterized in that** the substrate from stage (1) is a metallic or plastics substrate.

14. Multicoat paint system producible by the method according to any of Claims 11 to 13.

## Revendications

1. Vernis de base aqueux pigmenté contenant un produit de réaction à base de polyéther fonctionnalisé par hydroxy, qui peut être préparé par une transformation formant des groupes uréthane de
(a) au moins un composant contenant des groupes isocyanate, qui peut être préparé par une réaction formant des groupes uréthane d'au moins un diisocyanate organique (a1) avec au moins un polyéther (a2) de formule structurale générale (I) 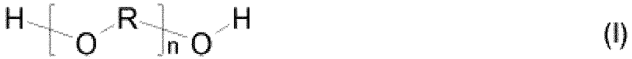 dans laquelle
R est un radical alkylène en C₃ à C₆ et n est choisi de telle manière que le polyéther (b) possède un poids moléculaire moyen en nombre de 500 à 5 000 g/mole, déterminé comme indiqué dans la description, les composants (a1) et (a2) étant utilisés en un rapport molaire de 1,8/1,7 à 3,0/1,0 et le composant résultant (a) présentant une teneur en isocyanate de 0,5 à 10,0 %
avec
(b) au moins un polyol organique,
les quantités des composants (a) et (b) étant ajustées l'une par rapport à l'autre de telle manière que le rapport des quantités molaires de groupes isocyanate du composant (a) et des quantités molaires du composant (b) se situe dans une plage de 0,33 à 0,95 et le produit de réaction résultant présente un poids moléculaire moyen en nombre de 700 à 20 000 g/mole, déterminé comme indiqué dans la description.

2. Vernis de base selon la revendication 1, **caractérisé en ce que** le polyéther (a2) possède un poids moléculaire moyen en nombre de 600 à 3 200 g/mole.

3. Vernis de base selon la revendication 1 ou 2, **caractérisé en ce que** le groupe R selon la formule structurale générale (I) représente des radicaux tétraméthylène.

4. Vernis de base selon l'une quelconque des revendications 1 à 3, **caractérisé en ce que** les quantités des composants (a) et (b) sont ajustées l'une par rapport à l'autre de telle manière que le rapport des quantités molaires de groupes isocyanate du composant (a) et des quantités molaires du composant (b) se situe dans une plage de 0,40 à 0,85.

5. Vernis de base selon l'une quelconque des revendications 1 à 4, **caractérisé en ce que** le produit de réaction à base de polyéther possède un poids moléculaire moyen en nombre de 1 500 à 12 000 g/mole.

6. Vernis de base selon l'une quelconque des revendications 1 à 5, **caractérisé en ce que** le composant (a) présente une teneur en isocyanate de 1,0 à 6,5 %.

7. Vernis de base aqueux pigmenté selon l'une quelconque des revendications 1 à 6, **caractérisé en ce que** la somme des proportions en pourcentage en poids, par rapport au poids total du vernis de base aqueux pigmenté, de tous les produits de réaction à base de polyéther est de 0,1 à 20 % en poids.

8. Vernis de base aqueux pigmenté selon l'une quelconque des revendications 1 à 7, **caractérisé en ce qu'**il comprend une résine de polyuréthane greffée au moyen de monomères oléfiniquement insaturés, qui contient de plus des groupes hydroxyle, ainsi qu'une résine de mélamine.

9. Vernis de base aqueux pigmenté selon l'une quelconque des revendications 1 à 8, **caractérisé en ce que** le composant (b) présente trois groupes hydroxyle.

10. Utilisation d'un produit de réaction dans un vernis de base aqueux pigmenté pour l'amélioration de la résistance aux impacts de pierre de vernissages qui sont préparés en utilisant le vernis de base, le produit de réaction étant un produit de réaction à base de polyéther fonctionnalisé par hydroxy qui peut être préparé par transformation formant des groupes uréthane de
(a) au moins un composant contenant des groupes isocyanate, qui peut être préparé par une réaction formant des groupes uréthane d'au moins un diisocyanate organique (a1) avec au moins un polyéther (a2) de formule structurale générale (I) 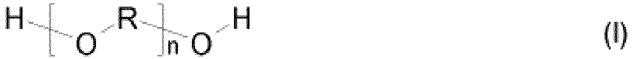 dans laquelle
R est un radical alkylène en C₃ à C₆ et n est choisi de telle manière que le polyéther (b) possède un poids moléculaire moyen en nombre de 500 à 5 000 g/mole, déterminé comme indiqué dans la description, les composants (a1) et (a2) étant utilisés en un rapport molaire de 1,8/1,7 à 3,0/1,0 et le composant résultant (a) présentant une teneur en isocyanate de 0,5 à 10,0 %
avec
(b) au moins un polyol organique,
les quantités des composants (a) et (b) étant ajustées l'une par rapport à l'autre de telle manière que le rapport des quantités molaires de groupes isocyanate du composant (a) et des quantités molaires du composant (b) se situe dans une plage de 0,33 à 0,95 et le produit de réaction résultant présente un poids moléculaire moyen en nombre de 700 à 20 000 g/mole, déterminé comme indiqué dans la description.

11. Procédé pour la préparation d'un vernissage multicouche, dans lequel
(1) un vernis de base aqueux pigmenté est appliqué sur un substrat,
(2) un film de polymère est formé partir du vernis appliqué dans l'étape (1),
(3) un vernis transparent est appliqué sur la couche de vernis de base ainsi obtenue et ensuite
(4) la couche de vernis de base est durcie ensemble avec la couche de vernis transparent,
**caractérisé en ce que** dans l'étape (1) un vernis de base aqueux pigmenté selon l'une quelconque des revendications 1 à 9 est utilisé.

12. Procédé selon la revendication 11, **caractérisé en ce que** le substrat de l'étape (1) est un substrat métallique revêtu par une couche de vernis électrophorétique durcie et toutes les couches appliquées sur la couche de vernis électrophorétique sont durcies ensemble.

13. Procédé selon la revendication 11, **caractérisé en ce que** le substrat de l'étape (1) est un substrat de métal ou de matière plastique.

14. Vernissage multicouche pouvant être préparé selon le procédé selon l'une quelconque des revendications 11 à 13.
